# EUROPÄISCHE PATENTANMELDUNG

(11) **EP 4 742 102 A1**
(43) Veröffentlichungstag der Anmeldung: **13.05.2026**
(21) Anmeldenummer: 24211185.4
(22) Anmeldetag: 06.11.2024
(51) Int. Cl.: G06N 3/0455, G06N 3/088

(54) **VERFAHREN ZUR ANOMALIEERKENNUNG IN EINER KOMPLEXEN ANLAGE MITTELS AUTOENCODER, COMPUTERPROGRAMMPRODUKT UND VORRICHTUNG**

(71) Anmelder: Siemens Aktiengesellschaft, 80333 München (DE)
(72) Erfinder: Al Hage Ali, Ali, 91056 Erlangen (DE); Amschler, Benjamin, 95500 Heinersreuth (DE); Herbst, Peter, 91058 Erlangen (DE); Thamm, Aleksandra, 90762 Fürth (DE); Thamm, Florian, 90762 Fürth (DE)
(74) Vertreter: Siemens Patent Attorneys

(57) **Zusammenfassung**

Die Erfindung betrifft eine Anomalieerkennung in einer Anlage, beispielsweise einer Industrieanlage oder einer Energieerzeugungsanlage wie einem Windrad.

Im Grundlegenden wird ein Autoencoder Modell trainiert. Somit benötigt der Anwender kein Expertenwissen, um die Anomaliedetektion zu konfigurieren, sondern es muss nur eine Datenmenge bereitgestellt werden, welche ausreichend Informationen über das normale Verhalten der zu überwachenden Maschine beinhaltet. Hiermit kann das Modell trainiert werden und die zukünftigen Messdaten können automatisiert überwacht werden.

Eine Serienfertigung durchläuft in der 2D Ebene der PCA reduzierten Vektoren immer wieder die gleichen Pfade. Diese Pfade und eine feststellbar stetig wachsende Abweichung des Pfades von dem Muster, die beispielsweise durch Verschleiß begründet ist, kann zügig und zuverlässig erkannt werden.

Der entscheidende Unterschied zu bereits bekannten Verfahren liegt im Mechanismus, mit dem durch den Autoencoder entschieden wird, welche Zeitreihensequenzen Anomalien sind. Hierbei wird nicht die Rekonstruktion des Autoencoders betrachtet, sondern die versteckten Zustände, also der vom Encoder generierte Vektor.

## Beschreibung

Industrielle Steuerungen (speicherprogrammierbare Steuerungen SPS) werden verwendet, um komplexe Anlagen, bestehend aus vielen miteinander interagierenden Einheiten zu überwachen und zu steuern. Bei einer solchen Anlage kann es sich beispielsweise um eine Industrielle Produktionsanlage zur Herstellung von Gütern oder Stoffen handeln. Es sind aber auch andere Einsatzmöglichkeiten bekannt, beispielsweise kann es sich bei dem komplexen System auch um eine Energieerzeugungsanlage, genauer um ein Windrad handeln, oder um eine Bewegungssteuerung von einem Fahrgeschäft. Viele Fahrgeschäfte (Karussells, Luft- und Schiffschaukeln, Riesenräder, Achterbahnen oder Freifalltürme) werden von einer Steuerung gesteuert und führen ebenfalls zyklische Bewegungen aus, bei welchen immer wieder ein gleichartiger Bewegungsablauf durchgeführt wird und das Ende einer Bewegung direkt in den Anfang eines neuen Zyklus übergeht. Hier ist eine Überwachung der reibungslosen Funktion essentiell, da bei einer Fehlfunktion das Leben der Fahrgäste potentiell gefährdet ist.

Die Einheiten und der Arbeitsprozess der Anlage, ggf. auch das Produktionsergebnis, werden durch Sensoren überwacht, im Laufe des Betriebs werden so unzählige Messdaten geliefert. Darüber hinaus werden SPS-Programme verwendet, um Live-Daten von Sensoren für Muster zu sammeln, um die Leistung eines Prozesses zu maximieren. Dies gewährt dem Anlagenbetreiber tiefere Einblicke in den Herstellungsprozess, was zu einer höheren Produktionseffizienz bei gleichzeitiger Reduzierung von Ausfallzeiten führt.

Im Folgenden wird davon ausgegangen, dass die Steuerung in der Anlage (unter anderem) einen Bewegungsablauf steuert, welcher (im Besten Fall) identisch wiederholt ausgeführt wird.

Während des Betriebs der Anlage treten im Laufe der Zeit Veränderungen auf, beispielsweise durch Verschleiß, oder auch durch äußere Einflüsse, welche für den Anlagenbetreiber ggf. zunächst nicht erkennbar sind. Diese Veränderungen können durch die Mechanik verursacht werden, aber auch durch fehlerhafte elektronische Bauelemente oder Mikroelektronik zustande kommen. Auch äußere Einflüsse können nicht ausgeschlossen werden, beispielsweise die Umweltbedingungen, denen die Anlage während des Betriebs ausgesetzt ist.

Werden Veränderungen in der Anlage/Maschine nicht frühzeitig erkannt, kann dies zu größeren Schäden führen, damit einhergehend zu erhöhten Ausfallzeiten und einem zusätzlichen und erhöhtem Wartungsaufwand. Das ist aus Sicht des Betreibers der Anlage auf jeden Fall zu vermeiden, da Folgeschäden unnötig große Reparaturen erfordern, zu verlängertem Funktionsausfall und damit am Ende zu unnötigen finanziellen Verlusten führt. Daher ist es im Interesse des Anlagenbetreibers, alle Veränderungen so schnell wie möglich zu erkennen und zu bewerten, um daraus folgende Maßnahmen abzuleiten. Die Ursache der Anomalie muss erkannt werden, das oder die betroffenen Teile der Anlage und die daraus entstehenden Folgen. Reparaturen, Wartungen oder Austausch von betroffenen Teilen müssen geplant werden: ist ein kritischer Teil der Anlage betroffen oder kann eine Reaktion auf einen späteren Zeitpunkt geplant werden, beispielsweise eine sowieso vorhandene Ruhephase der Anlage.

Es werden daher Anomaliedetektionsmethoden eingesetzt, die eine Vielzahl an unterschiedlichen Messdaten automatisch auswerten und so Zusammenhänge und Veränderungen erkennen, die selbst für Experten nicht sichtbar sind.

Die automatische Detektion von Anomalien basierend auf Zeitreihendaten ist ein komplexes Problem, welches meist nur für sehr spezifische Anwendungsgebiete gelöst wird. Das Ziel dieser Detektionsmethoden ist eine hohe Erkennungsrate von Anomalien, bei zugleich niedriger Rate an falschen Vorhersagen. Bisherige Ansätze im Stand der Technik präsentieren vielversprechende Ergebnisse, deren Zuverlässigkeit allerdings fragwürdig bleibt. Die ausgearbeiteten Methoden werden häufig mit trivialen, nicht realistischen Datensätzen getestet und evaluiert [R. Wu and E. J. Keogh. "Current time series anomaly detection benchmarks are flawed and are creating the illusion of progress", 2020.]. Vorhergesagte Anomalien solcher Modelle sind daher stets mit Vorsicht zu interpretieren. Weiterhin gibt es verschiedene Arten von Anomalien (punktuelle, kontextuelle und kollektive Anomalie), die unterschiedlich komplexe Problemansätze benötigen. Bei der Detektion kontextueller Anomalien müssen sämtliche Daten immer innerhalb ihres Kontextes betrachtet werden. Im Falle von Zeitreihendaten kann sich dieser über einen beliebig langen Zeitbereich erstrecken und macht somit die Anwendung von Neuronalen Netzen schwierig, da die Verarbeitung großer Zeitbereiche mit den gängigen Rekurrenten Neuronalen Netzwerken RNN einen hohen Rechenaufwand erfordert.

Durch regelmäßige manuelle Inspektion und kontinuierliche Wartung der Anlagenteile wird heutzutage der Anlagen- und Maschinenzustand überwacht. Meist werden Veränderungen oder Probleme erst erkannt, wenn es zu einem Ausfall von Maschinen und Anlagen gekommen ist.

Zudem gibt es eine Vielzahl an Algorithmen aus dem Bereich der Künstlichen Intelligenz, welche meist Domänenspezifisch entwickelt werden und daher nicht einfach auf andere Anwendungsfälle übertragen werden können. Diese umfassen: Statistische Methoden, Machine Learning, Clustering, Deep Learning (Autoencoder, Variational Autoencoder, Generative Adverserial Networks).

Der Autoencoder ist ein künstliches neuronales Netz, das dazu genutzt wird, effiziente Codierungen zu lernen. Das Ziel eines Autoencoders ist es, eine komprimierte Repräsentation (Encoding) für einen Satz Daten zu lernen und somit auch wesentliche Merkmale zu extrahieren. Dadurch kann er zur Dimensionsreduktion genutzt werden.

Der Autoencoder benutzt mindestens drei Schichten:
- Eine Eingabeschicht. Bei der Gesichtserkennung könnten die Neuronen beispielsweise die Pixel einer Fotografie abbilden.
- Einige signifikant kleinere Schichten, die das Encoding bilden.
- Eine Ausgabeschicht, in der jedes Neuron die gleiche Bedeutung hat wie das entsprechende in der Eingabeschicht.

Ein Autoencoder kann verwendet werden, um den normalen Zustand einer Maschine anhand von Trainingsdaten zu erlernen.

Die Trainingsdaten können allgemeine Sensordaten von verschiedensten Maschinenarten sein. Es wird ein neuronales Netz bestehend aus einem Encoder und einem Decoder trainiert, wobei der Encoder die eingehenden Daten in einen multi-dimensionalen Vektor komprimiert und der Decoder aus diesem Vektor wieder die ursprünglichen Daten (mit Verlust) errechnet. Wenn die eingegebenen Daten immer wieder die gleichen Muster enthalten wie die ursprünglichen Daten, wird diese Rekonstruktion besser funktionieren als für neue und unbekannte Muster. Für das Training eines Autoencoders muss lediglich ein Datensatz an regulären / normalen Daten bereitgestellt werden. Hierdurch ist die Methode nicht nur durch Domänen Experten bedienbar.

In P. Malhotra, A. Ramakrishnan, G. Anand, L. Vig, P. Agarwal and G. Shroff. "LSTM-based Encoder-Decoder for Multi-sensor Anomaly Detection", 2016, wird der Autoencoder mit dem Ziel der invertierten Rekonstruktion der originalen Zeitreihe trainiert, um den Trainingsprozess zu verbessern. Die aufgezeigten Ergebnisse des Autoencoders bieten eine gute Präzision (prozentuale Anzahl der vorhergesagten Anomalien, die tatsächlich Anomalien sind) bei sehr geringem Recall (prozentuale Anzahl der erkannten Anomalien). Der verwendete Autoencoder basiert auf LSTMs (Long Short-Term Memory), welche Rechenintensiv sind, und zwar vor allem dann, wenn in die Berechnung möglichst viel Kontext (also eine lange Zeitreihe) einfließen soll.

In der Patentanmeldung WO2019133316A1 wird zur Anomaliedetektion ebenfalls ein Autoencoder Modell verwendet, welches auf Basis der Rekonstruktion des Inputs eine Entscheidung trifft. Als Grundlage für dieses Modell werden CNNs (Convolutional Neural Network) erwähnt, welche performanter als LSTMs sind.

Keine dieser Methoden fokussiert sich auf zyklische Anwendungen, die sich dadurch auszeichnen, dass sie Messdaten in sich-wiederholenden ähnlichen Strukturen liefern. Für zyklische Anwendungen ist es leichter, einen Normalzustand oder das normale Verhalten der Maschine zu definieren. Die beschriebenen Methoden versuchen das Problem auf eine generelle Art zu lösen und nutzen somit nicht den Vorteil, der sich aus zyklischen Daten ergibt.

Um einen Mehrwert für industrielle Anlagen zu bieten, ist es Aufgabe der Erfindung, eine leicht bedienbare und konfigurierbare Methode zur Anomalieerkennung anzugeben, die für eine Vielzahl an verschiedenen Anwendungsgebieten verwendet werden kann und auch zuverlässige Vorhersagen liefert. Zudem sollte die Methode die verfügbaren Rechenressourcen effizient nutzen, um auch auf schwächerer Hardware lauffähig zu sein.

Die Aufgabe wird gelöst durch ein Verfahren gemäß den Merkmalen des Patentanspruchs 1. Weiterhin wird die Aufgabe gelöst durch ein Computerprogrammprodukt gemäß den Merkmalen des Patentanspruchs 9 und einer Vorrichtung gemäß den Merkmalen des Patentanspruchs 10.

Das Verfahren zur Anomalieerkennung in einer komplexen Anlage mit einer Steuerung, wobei die Steuerung Daten von der Anlage empfängt, Daten verarbeitet und Daten an die Anlage sendet, mittels eines Autoencoders,
- der Autoencoder besteht aus einem Encoder, einem Decoder und einem Hidden Layer,
- der Autoencoder ist auf zu überwachende Daten der komplexen Anlage trainiert
- aus den Daten durch den Encoder berechnete und in dem Hidden Layer des Autoencoder versteckten Zustände werden Vektoren generiert,
mit folgenden Schritten:
- die generierten Vektoren in den 2-dimensionalen Raum projiziert werden, und
- ein erster Pfad basierend auf den in den 2-dimensionalen Raum projizierten Vektoren generiert wird,

und neue weitere Daten durch den Encoder berechnete und in dem Hidden Layer des Autoencoder versteckten Zustände zu weiteren Vektoren generiert und projiziert werden, und das Ergebnis mit dem ersten Pfad verglichen werden,
und eine erkannte Abweichung in einem Anomalie-Score berechnet wird,
und abhängig von dem Anomalie-Score die Steuerung der komplexen Anlage einen Alarm auslöst.

Weitere Ausführungsformen werden durch die Unteransprüche angegeben.

Die generierten Vektoren können dabei konfigurationsabhängig hochdimensional sein. Sind die Muster in den Daten komplex, dann können die Vektoren auch mehr als 100 Zeilen haben.

Die Erfindung wird auch durch die Figuren dargestellt, dabei zeigt
Figur 1 einen grundsätzlichen Ablauf von Trainingsphase und Inferenzphase des neuronalen Netzes,
Figur 2 eine Darstellung der ermittelten Daten am Beispiel einer Zuckerzentrifuge und
Figur 3 eine analoge Darstellung der Daten im Beispiel mit deutlichen Abweichungen.

Die Anomalieerkennung in einer Anlage, beispielsweise einer Industrieanlage oder einer Energieerzeugungsanlage wie einem Windrad, ist ein komplexes Problem und kaum generell lösbar, weshalb die Spezialisierung auf zyklische Problemstellung wie z. B. im Falle einer Industrieanlage die Serienfertigung oder abwechselnde CNC-Programme entscheidende Vorteile bringt. Im Grundlegenden wird ein Autoencoder Modell trainiert, es sind aber auch andere Arten von Neuronalen Netzen denkbar, sofern diese in der Lage sind, eine nicht-lineare Dimensionsreduktion der Eingangsdaten durchzuführen. Somit benötigt der Anwender kein Expertenwissen, um die Anomaliedetektion zu konfigurieren, sondern es muss nur eine Datenmenge bereitgestellt werden, welche ausreichend Informationen über das normale Verhalten der zu überwachenden Maschine beinhaltet. Hiermit kann das Modell trainiert werden und die zukünftigen Messdaten können automatisiert überwacht werden.

Eine Serienfertigung durchläuft in der 2D Ebene der PCA (Principal Component Analysis, auch Hauptkomponentenanalyse genannt) reduzierten Vektoren immer wieder die gleichen Pfade. Diese Pfade und eine feststellbar stetig wachsende Abweichung des Pfades von dem Muster, die beispielsweise durch Verschleiß begründet ist, kann zügig und zuverlässig erkannt werden.

Der entscheidende Unterschied zu bereits bekannten Verfahren liegt im Mechanismus, mit dem durch den Autoencoder entschieden wird, welche Zeitreihensequenzen Anomalien sind. Hierbei wird nicht die Rekonstruktion des Autoencoders betrachtet, sondern die versteckten Zustände, also der vom Encoder generierte Vektor. Diese Vektoren werden mit Hilfe von PCA (Principal Component Analysis) in den zweidimensionalen Raum projiziert. Bei manchen Anwendungsfällen, wie z. B. Serienfertigung oder abwechselnder Verwendung unterschiedlicher CNC-Programme werden zyklisch immer wieder gleiche Bewegungsabläufe und Tätigkeiten ausgeführt und damit üblicherweise ähnliche Daten generiert. Somit bilden die genannten Vektoren auch zyklische Pfade in der 2D Ebene. Bei Verschleißerscheinungen können sich diese Pfade geringfügig ändern. Der genaue Ablauf ist nachfolgend beschrieben und in Training und Vorhersage unterteilt.

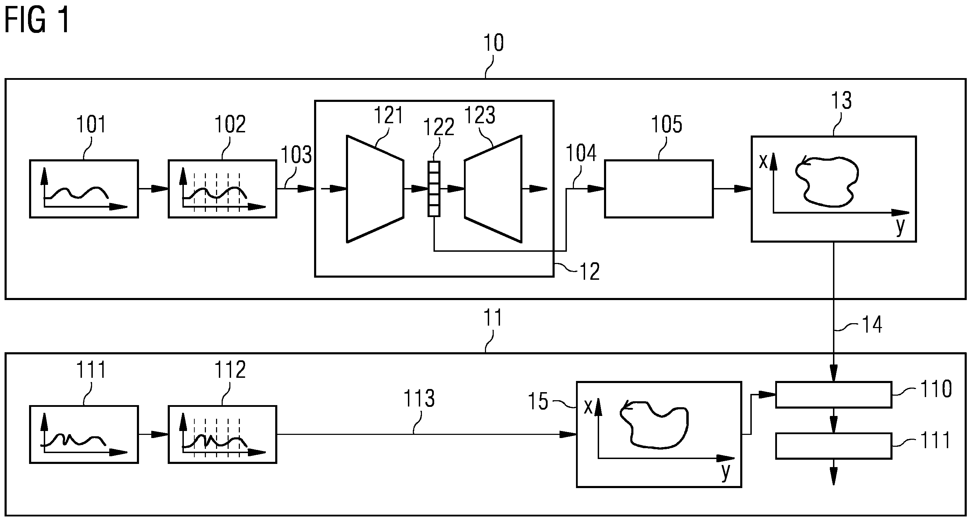

Der gesamte Ablauf ist in Figur 1 schematisch dargestellt

Zunächst wird ein Autoencoder mit geeigneten Daten aus dem zu überwachenden Verfahren trainiert, 10, mit den folgenden Schritten:
- Optional können vorab verrauschte Signale bei Bedarf geglättet werden (konfigurierbar).
- Die Trainingsdaten werden in den Bereich 0 bis 1 normalisiert, 101.
- Die Trainingsdaten werden in Sequenzen mit fester Länge aufgeteilt, 102, wobei diese Sequenzen auch überlappen können. 80% dieser Sequenzen werden zufällig für das tatsächliche Training und 20% für die Validierung verwendet. 80% ist ein üblicher Wert für das Training, kann aber auch variiert werden, sofern ausreichend Daten für eine Validierung der Trainingsergebnisse übrig bleiben. Trainiert wird mit dem Backpropagation Algorithmus ein Neuronales Netz, welches als Autoencoder 12 aufgebaut ist. Das Optimierungsziel ist die Rekonstruktion der eingegebenen Zeitreihensequenz.
- Sobald das neuronale Netz ausreichend trainiert ist, werden sämtliche Zeitreihensequenzen in der korrekten zeitlichen Abfolge vom Autoencoder verarbeitet und dabei die versteckten Zustände 122 des Autoencoders berechnet. Das Ergebnis ist ein Vektor für jede einzelne Zeitreihensequenz 104. Zur weiteren Betrachtung werden diese Vektoren mittel PCA (Principal Component Analysis) auf zweidimensionale Vektoren reduziert, 105. Diese 2D Vektoren ergeben einen Pfad, 13. Für zyklischen Anwendungen, bei denen stets die gleiche Abfolge an Daten zyklisch auftritt, ist dieser Pfad ebenfalls zyklisch.
- Dieser Pfad 13 bildet die Basis für die Vorhersagen und ist somit zusammen mit dem trainierten Autoencoder Modell das Gesamtergebnis des Trainings.

Inferenz, 11 / Vorhersage:
Um Anomalieentscheidungen zu treffen, werden folgende Schritte durchgeführt:
- Neue Messdaten 111 werden kontinuierlich in Zeitreihensequenzen gleicher Länge eingeteilt und in den Autoencoder gegeben, 112. Hier müssen lediglich die versteckten Zustände des Autoencoders berechnet werden, 113, also wird der Decoder nicht angewandt. Diese Vektoren werden ebenfalls mit der im Trainingsschritt aufgestellten PCA (Principal Component Analysis) auf zwei Dimensionen reduziert.
- Die zeitliche Abfolge der zweidimensionalen Vektoren bildet ebenfalls Pfade, 15. Die Länge des zu betrachtenden Pfades ist konfigurierbar.
- Aus der Abweichung des Pfades, 110, der neuen Daten zu den Pfaden aus dem Training wird ein Anomalie-Score berechnet, welcher mit einem Schwellwert verglichen wird, 111. Dieser Schwellwert kann automatisiert aus den Trainingsdaten berechnet werden und ist beeinflussbar über einen konfigurierbaren Sensitivitätsparameter. Zur Berechnung des Schwellwerts wird für alle Pfade aus den Trainingsdaten der Anomalie-Score berechnet, wobei ein geeignetes Quantil dieser Werte (z.B. 95% Quantil) genommen wird und mit dem Sensitivitätsparameter multipliziert wird.

Die Berechnung eines Anomalie Scores kann beispielsweise wie folgt ablaufen:
Jeder Zyklus hat einen zugehörigen Pfad. Wir können Punkte in diesem Pfad jeweils Zeitpunkten in einem Zyklus zuordnen. Bspw. Die ersten 5s im Zyklus bilden den ersten Punkt im Pfad, Sekunden 50-55 gehören zum 11. Punkt im Pfad, usw.

Zur Berechnung des Anomalie-Scores aus einem neuen betrachteten Pfad wird der erste Punkt im neuen Pfad genommen und die ersten Punkte aller Trainingspfade gesucht, die am nächsten sind. Die Differenzen (2D Distanz) dazu werden gebildet.

Sowohl im neu zu betrachtenden Pfad als auch bei den Trainingspfaden bearbeitet man so einen Punkt nach dem anderen und berechnen wieder die jeweiligen Differenzen, (d. h. die Punkte 1 müssen miteinander verglichen werden, sowie die Punkte 2, etc.)

In einer Ausführungsform könnte man die Bedingung aufweichen und z. B. Punkt n des neuen Pfades mit Punkte n-1, n und n+1 der Trainingspfade vergleichen und davon das Minimum zu nehmen.

Um einen Anomalie-Score für den gesamten Pfad zu berechnen könnte man also für jeden Trainingspfad die Distanzen der Pfadpunkte zum neuen Pfad berechnen und dann mitteln. Für alle Pfade kann man die Werte dann nochmal mitteln und erhält einen Anomalie Score.

Für den Inferenzschritt wird die gleiche Skalierung wie im Training angewendet, und zwar unter Verwendung des trainierten Modells wird ein Anomalie-Score berechnet. Gleiche Skalierung bedeutet, dass die Länge der Sequenzen im Wesentlichen gleich ist, um eine Vergleichbarkeit der Ergebnisse zu gewährleisten. Der Score wird ggf. geglättet und mit verschiedenen Schwellenwerten verglichen, die jeweils einen unterschiedlichen Schweregrad der Anomalie darstellen können. Bei dem Berechnungsbeispiel oben wird der Anomalie-Score größer, je weiter der zu betrachtende Pfad von den Trainingspfaden abweicht. Der höchste Schwellenwert löst somit den schwersten Alarm aus. Ein niedrigerer Schwellwert würde demgemäß dann nur noch zu einer Warnung führen. Alle Schwellenwerte können durch einen Sensitivitätsparameter variiert werden, der zur Anpassung der Anzahl der erkannten Anomalien verwendet wird.

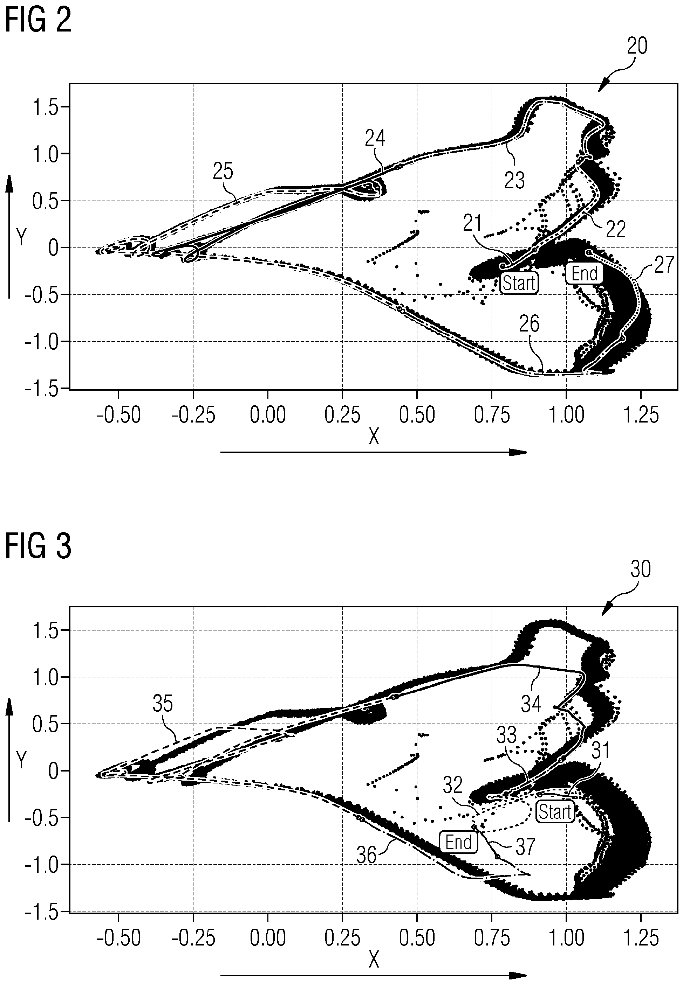

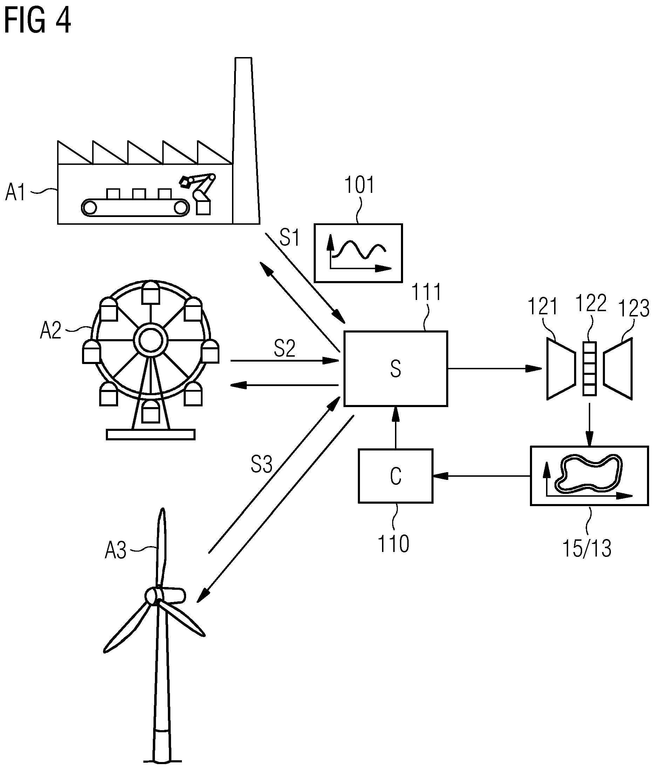

Die Anomalieerkennung wird im Folgenden für Daten am Beispiel einer Zuckerzentrifuge in Figur 2 und 3 ausgeführt. Dieses Beispiel soll nicht einschränkend verstanden werden, andere Beispiele für die genannten Anlagenformen sind dem Fachmann geläufig.

In dem gewählten Beispiel werden die zweidimensionalen versteckten und projizierten Zustände der Zeitreihensequenzen aus den Trainingsdaten in einem Scatterplot 20 dargestellt. Gewisse Wertebereiche im Plot haben eine hohe Dichte an Vektoren. Die in sieben Bereiche 21, ... , 27 bzw. 31, ..., 37 unterteilte Linie beschreibt den Pfad für die 2D Vektoren für jeweils einen Produktionszyklus. Man sieht in Abbildung 2, dass dieser Pfad sehr nahe bei den üblichen Pfaden aus den Trainingsdaten liegt.

Bei Abbildung 3, welche im Vergleich den Pfad eines irregulären Produktionszyklusses zeigt, sieht man deutliche Abweichungen, beispielsweise in den Bereichen 32, 34 oder 37, obwohl sich die Messdaten selbst nur gering vom üblichem (normalem) Verhalten unterscheiden. Es wäre hiermit also mit großer Sicherheit möglich, eine Anomalie festzustellen.

Wenn man die Anomaliescoreberechnung wie oben bereits beschrieben anwendet, dann würde es auch zu einem schlechteren Wert führen, wenn der zu betrachtende Pfad nicht synchron zu den Trainingspfaden verläuft, beispielsweise könnte sich der neue Pfad innerhalb von 5 Pfadpunkten nur eine Einheit im Raum "fortbewegen", die Trainingspfade bewegen sich mit 5 Pfadpunkten aber 10 Einheiten im Raum fort. Dann ist der neue Pfad immer noch im Bereich des Trainingspfades, vom Verlauf der Trainingspfade aber nicht synchron. Das könnte beispielsweise passieren, wenn im Zuckerzentrifugenprozess normalerweise für 20s ein bestimmter Betriebspunkt gefahren wird, aber bei dem neuen Pfad wurde dieser Betriebspunkt für 40s gehalten.

Durch das erfindungsgemäße Verfahren wird der Autoencoder auf eine andere Art und Weise verwendet als gewöhnlich, da die versteckten Zustände tatsächlich nicht nur durchlaufen sondern verwendet werden. Die versteckten Zustände werden zunächst mit PCA reduziert und daraus Pfade abgeleitet. Durch die Pfadbildung lässt sich sehr viel Kontext in eine Anomalie Entscheidung integrieren, da ein Pfad aus den Daten eines sehr großen Zeitbereichs berechnet wird, ohne dass der Input an den Autoencoder stark vergrößert werden muss. Somit lässt sich deutlich Rechenleistung einsparen und zudem wird die Anomalieentscheidung robuster. Robuster bedeutet dabei, dass man bereits minimale Abweichungen erkennt, die über einen langen Zeitraum bestehen bleiben. (Der Motor fährt beispielsweise 15 Min lang 1500,1 RPM statt 1500 RPM.) Für einen normalen Algorithmus wäre das höchstwahrscheinlich in der Toleranz.

In einem anderen Beispiel kann eine Situation erkannt werden, in denen ein Motor zu lange in einer festen Drehzahl bleibt. Die gängigen Autoencoder Methoden werden in einer Berechnung eine fixe Anzahl an Datenpunkte berücksichtigen. Wenn diese Datenpunkte nur einen Bereich von 2 Minuten abdecken, dann ist es unmöglich, dass dieses Modell erkennt, wenn ein Motor bspw. 3 Minuten Drehzahl 1500RPM hat, obwohl er das nur zwei Minuten haben sollte.

Vorhersagen, welche auf Basis der Abweichung eines langen 2D Pfades getroffen werden, sind zudem leichter interpretierbar, wie auch in Abbildung 2 und 3 erkenntlich ist. Während gewisse Pfadsegmente sehr gut im Bereich der üblichen Pfade aus den Trainingsdaten liegen, gibt es auch Segmente, die stark davon abweichen. Dies lässt eine genaue Aussage zu, wo der Fehler im Prozess voraussichtlich auftritt.

Der beschriebene Anwendungsfall "Zuckerproduktion mit Zentrifugen" zeigt genau diese zyklischen Pfade und wird im Weiteren noch genauer erläutert.

Die Produktion von Zucker beginnt mit dem Rohstoff: Zuckerrohr oder Zuckerrüben. Der Rohstoff wird gereinigt, um Schmutz zu entfernen, und dann in Scheiben geschnitten und mit Wasser verrührt. Der Zucker diffundiert ins Wasser, was uns mit einer zuckerhaltigen Lösung (Sirup) zurücklässt. Eine eingedickte Flüssigkeit bleibt nach Filterung und Verdunstung von Teilen des Wassers. Diese Flüssigkeit wird gekocht, um das Wachstum von Zuckerkristallen zu verstärken, und sobald diese Kristalle groß genug sind, wird es zum Abkühlen gelagert. Der verwendete Tank bewegt die Flüssigkeit dabei kontinuierlich, um zu verhindern, dass sich die Zuckerkristalle absetzen.

Für die Weiterverarbeitung kommen drei verschiedene Zentrifugentypen "A", "B" und "C" zum Einsatz.

Die abgekühlte Flüssigkeit wird in die erste Zentrifuge "A" gegeben, und durch schnelle Drehung wird die Flüssigkeit extrahiert, während Zuckerkristalle an den Zentrifugenwänden zurückgehalten werden. Die Flüssigkeit ist immer noch nicht frei von Zuckerkristallen und wird dicker als zuvor. Das Entfernen dieser Kristalle erfolgt mit weiteren Zentrifugen, die eine andere Konfiguration haben (andere Form und höhere Drehzahl), um die unterschiedliche Viskosität der Flüssigkeit zu bewältigen.

Da sich ihr Verhalten im Laufe der Zeit dynamisch ändern kann, eignen sich Recurrent Neural networks RNN (aus denen der Autoencoder besteht) sehr gut für Modell-Zeitreihen-Daten, was die Hauptmotivation ist, sie für die Daten der Messungen an der Zuckerzentrifuge zu verwenden.

In dem Beispiel werden Daten von einem Frequenzumrichter und Motor, der eine Zuckerzentrifuge antreibt, verwendet. Für eine Charge produzierten Zuckers müssen die folgenden Schritte ausgeführt werden:
(1) Die Flüssigkeit mit dem gelösten Zucker wird zunächst mit niedriger Drehzahl in die Zentrifuge gefüllt.
(2) Die Geschwindigkeit wird erhöht, so dass das Wasser aus dem Zuckersirup extrahiert wird. Übrig bleibt der kristalline Zucker an den Wänden der Zentrifuge.
(3) Die Zentrifuge bremst auf die übliche Leerlaufdrehzahl.
(4) Messer werden in die Zentrifuge eingeführt, um den produzierten Zucker an den Wänden herauszukratzen.

Die Dauer von Schritt (1) und (2) sind nicht festgelegt und können in bestimmten Grenzen variieren, während die übrigen Schritte des Produktionszyklus starr sind. Nachdem alle Schritte ausgeführt wurden, wird der nächste Batch gestartet.

Das Drehmoment ist die vom Motor ausgeübte Kraft. Sobald ein Motor eine konstante Drehzahl erreicht, ist die Kraft, die erforderlich ist, um die Zentrifuge auf dieser Drehzahl zu halten, niedriger weniger als ursprünglich nötig, um diese Geschwindigkeit zu erreichen.

Wenn, anscheinend widersprüchlich, das Diagramm Phasen enthält, in denen die Drehzahl konstant bleibt, aber ein hohes Drehmoment zu sehen ist, kann dies nur durch externe Faktoren erklärt werden, wie z. B das Einfüllen von Massen in die Zentrifuge. Der Motor muss dann die aufgebrachte Kraft erhöhen, um die gleiche Drehzahl zu halten.

Es ist auch möglich, andere Signale zu verwenden. Die Temperatur ist beispielsweise ein sich langsam änderndes Signal, es dauert sehr lange, bis das Maximum oder Minimum erreicht ist. Weil die Maschinen meist fast 24 Stunden am Tag verwendet werden, kühlen sie selten vollständig ab. Lediglich während der Wartung wird dies passieren, und wenn die Normaldaten keine vollständige Abkühlung des Geräts enthält, werden bei einfachen Anomaliedetektionsverfahren Anomalien erkannt, sobald die Maschine wieder hochgefahren wird.

Eine weitere Herausforderung für eine richtige Analyse sind die Temperaturunterschiede zwischen Sommer und Winter. Die Produktionshalle ist ggf. nicht klimatisiert, was im Sommer zu höheren durchschnittlichen und maximalen Motortemperaturen führt. Hier können ggf. Wetterdaten vom Standort der Maschinen verwendet werden, um zu validieren, dass die Umgebungstemperatur tatsächlich mit der Motortemperatur korreliert. Motorausfälle sind oft bei Temperaturen außerhalb des Grenzwerts sichtbar, daher ist es umso wichtiger, immer die Möglichkeit zu haben, einen überhitzten Motor zu erkennen, anstatt einem saisonalen Trend. Vor allem Probleme bei der Kühlung können sehr einfach und kosteneffizient zu beheben sein, so dass es sinnvoll ist, die Fähigkeit zur Erkennung von diesen Szenarien in einem Detektionsmodell zu integrieren.

Die meisten Anomalien treten in dem beschriebenen Beispiel in Phase (1) auf, in der die Zuckerflüssigkeit eingefüllt wird. Eine typische Anomalie ist dort ein fehlendes Drehmoment, der anzeigt, dass die Zentrifuge leerläuft. Andernfalls kommt es regelmäßig vor, dass der Motor kurz vor der Beschleunigung gestoppt wird, was in der Regel eine Entscheidung von Bediener der Maschine ist.

Im Allgemeinen ist das Signal eines Motorstroms eines der interessantesten Signale, weil er Informationen über die Last des Motors enthält. Anomalien im Signal können nicht nur durch interne Faktoren verursacht werden, wie z. B. die Verschlechterung des Motors oder des Umrichters, sondern auch durch externe Faktoren, wie eine Änderung der Last des Motors.

Ein Beispiel für Lastwechsel kann anhand von Papierherstellungsmaschinen erläutert werden: Die beteiligten Motoren ziehen das Papierblatt durch das System, und daher wird ein erheblicher Motorstrom angelegt, um das erforderliche Drehmoment zu erreichen. Wenn das Papierblatt bricht, ist die Ladung abrupt verschwunden und es wird weniger Strom benötigt, um den Motor auf einer konstanten Drehzahl zu halten. Diese Anomalie wird in den elektrischen Signalen sichtbar.

Verschiedene Signale bzw. Messwerte sind für die beschriebene Auswertung geeignet (die Aufzählung ist nicht abschließend zu verstehen):
Motortemperatur, Drehzahlsollwert, Drehzahlistwert, Wirkleistung, Zwischenkreisspannung, Ausgangsfrequenz, oder der Strombetrag.

## Patentansprüche

1. Computerimplementiertes Verfahren zur Anomalieerkennung in einer komplexen Anlage (A1, A2, A3) mit einer Steuerung (S), wobei die Steuerung Daten (S1, S2, S3) von der Anlage empfängt, Daten verarbeitet und Daten an die Anlage sendet, mittels eines Autoencoders (12), wobei:
- der Autoencoder (12) aus einem Encoder (121), einem Decoder (123) und einem Hidden Layer (122) besteht,
- der Autoencoder (12) auf zu überwachende Daten (101) der komplexen Anlage trainiert ist und
- aus den Daten durch den Encoder (121) berechnete und in dem Hidden Layer (122) des Autoencoder versteckten Zustände Vektoren generiert (105) werden,
**dadurch gekennzeichnet, dass**
- die generierten Vektoren in den 2-dimensionalen Raum projiziert werden, und
- ein erster Pfad (13) basierend auf den in den 2-dimensionalen Raum projizierten Vektoren generiert wird,
und neue weitere Daten (111) durch den Encoder (121) berechnete und in dem Hidden Layer (122) des Autoencoder versteckten Zustände zu weiteren hochdimensionalen Vektoren generiert (15) und projiziert werden, und das Ergebnis mit dem ersten Pfad verglichen (110) werden,
und eine erkannte Abweichung in einem Anomalie-Score berechnet wird,
und abhängig von dem Anomalie-Score die Steuerung (S) der komplexen Anlage (A1, A2, A3) einen Alarm auslöst.

2. Computerimplementiertes Verfahren zur Anomalieerkennung in einer komplexen Anlage (A1, A2, A3) gemäß Patentanspruch 1, **dadurch gekennzeichnet, dass** die komplexe Anlage (A1, A2, A3) im Wesentlichen zyklisch wiederkehrende Bewegungen ausführt.

3. Computerimplementiertes Verfahren zur Anomalieerkennung in einer komplexen Anlage (A1, A2, A3) gemäß Patentanspruch 1 oder 2, **dadurch gekennzeichnet, dass** die komplexe Anlage (A1, A2, A3) insbesondere eine industrielle Anlage (A1) zur Herstellung von Waren oder eine Energieerzeugungsanlage (A3) oder ein Fahrgeschäft (A2) ist.

4. Computerimplementiertes Verfahren zur Anomalieerkennung in einer komplexen Anlage (A1, A2, A3) gemäß einem der vorherigen Patentansprüche, **dadurch gekennzeichnet, dass** die für das Training des Autoencoders (12) verwendeten Trainingsdaten vor dem Training normalisiert werden.

5. Computerimplementiertes Verfahren zur Anomalieerkennung in einer komplexen Anlage (A1, A2, A3) gemäß einem der vorherigen Patentansprüche, **dadurch gekennzeichnet, dass** die für das Training des Autoencoders (12) verwendeten Trainingsdaten vorher in Zeitreihensequenzen (102) fester Länge aufgeteilt werden und die neuen Daten in Zeitreihensequenzen (112) der gleichen Länge geteilt werden für eine Zeitreihensequenz.

6. Computerimplementiertes Verfahren zur Anomalieerkennung in einer komplexen Anlage (A1, A2, A3) gemäß einem der vorherigen Patentansprüche, **dadurch gekennzeichnet, dass** die Projektion der Vektoren auf 2D mittels Principal Component Analyse PCT (105) erfolgt.

7. Computerimplementiertes Verfahren zur Anomalieerkennung in einer komplexen Anlage (A1, A2, A3) gemäß einem der vorherigen Patentansprüche, **dadurch gekennzeichnet, dass** die Daten gemessene Daten aus der komplexen Anlage (A1, A2, A3) sind, insbesondere Temperatur, Motor- oder Generatorstrom, Drehzahl, Wirkleistung, Frequenz, Drehmoment, Zwischenkreisspannung.

8. Computerimplementiertes Verfahren zur Anomalieerkennung in einer komplexen Anlage (A1, A2, A3) gemäß einem der vorherigen Patentansprüche, **dadurch gekennzeichnet, dass** abhängig von dem Anomalie-Score durch die Steuerung (S) eine geeignete Aktion in der komplexen Anlage (A1, A2, A3) ausgelöst wird, um einen Schaden in der Anlage zu verhindern.

9. Computerprogrammprodukt zur Anomalieerkennung in einer komplexen Anlage (A1, A2, A3) geeignet zur Durchführung der Merkmale des Verfahrens gemäß einem der Patentansprüche 1 bis 8.

10. Vorrichtung (11) zur Anomalieerkennung in einer komplexen Anlage (A1, A2, A3) mit einer Steuerung (S), wobei die Steuerung Daten (S1, S2, S3) von der Anlage empfängt, Daten verarbeitet und Daten an die Anlage sendet, mittels eines Autoencoders (12),
wobei:
- der Autoencoder (12) aus einem Encoder (121), einem Decoder (123) und einem Hidden Layer besteht,
- der Autoencoder (12) auf zu überwachende Daten (101) der komplexen Anlage trainiert ist und dazu geeignet und eingerichtet ist, aus den Daten durch den Encoder (121) berechnete und in dem Hidden Layer (122) des Autoencoder versteckten Zustände Vektoren zu generieren (105), und die generierten Vektoren in den 2-dimensionalen Raum zu projizieren, und einen erster Pfad (13) basierend auf den in den 2-dimensionalen Raum projizierten Vektoren zu generieren,
und der Autoencoder (12) dazu geeignet und eingerichtet ist, neue weitere Daten (111) durch den Encoder (121) zu berechnen und in dem Hidden Layer (122) des Autoencoder versteckten Zustände zu hochdimensionalen Vektoren zu generieren (15) und mit dem ersten Pfad zu vergleichen (110),
und ein Vergleicher (C) dazu geeignet und eingerichtet ist, eine erkannte Abweichung zu ermitteln und einen Anomalie-Score zu berechnen,
und abhängig von dem Anomalie-Score die Steuerung (S) der komplexen Anlage (A1, A2, A3) anweisen, einen Alarm auszulösen.

11. Vorrichtung zur Anomalieerkennung in einer komplexen Anlage (A1, A2, A3) gemäß Patentanspruch 10, **dadurch gekennzeichnet, dass** die komplexe Anlage (A1, A2, A3) im Wesentlichen zyklisch wiederkehrende Bewegungen ausführt.

12. Vorrichtung zur Anomalieerkennung in einer komplexen Anlage (A1, A2, A3) gemäß Patentanspruch 10 oder 11, **dadurch gekennzeichnet, dass** die komplexe Anlage insbesondere eine industrielle Anlage zur Herstellung von Waren oder eine Energieerzeugungsanlage oder ein Fahrgeschäft ist.

13. Vorrichtung zur Anomalieerkennung in einer komplexen Anlage (A1, A2, A3) gemäß einem der vorherigen Patentansprüche 10 bis 12, **dadurch gekennzeichnet, dass** die für das Training des Autoencoders verwendeten Trainingsdaten vor dem Training normalisierte Daten sind.

14. Vorrichtung zur Anomalieerkennung in einer komplexen Anlage (A1, A2, A3) gemäß einem der vorherigen Patentansprüche 10 bis 13, **dadurch gekennzeichnet, dass** die für das Training des Autoencoders verwendeten Trainingsdaten vorher in Zeitreihensequenzen fester Länge aufgeteilt sind und die neuen Daten in Sequenzen der gleichen Länge geteilt sind und für eine Zeitreihensequenz.

15. Vorrichtung zur Anomalieerkennung in einer komplexen Anlage (A1, A2, A3) gemäß einem der vorherigen Patentansprüche 10 bis 14, **dadurch gekennzeichnet, dass** die Projektion der Vektoren auf 2D mittels Principal Component Analyse PCT (105) erfolgt.

16. Vorrichtung zur Anomalieerkennung in einer komplexen Anlage (A1, A2, A3) gemäß einem der vorherigen Patentansprüche 10 bis 15, **dadurch gekennzeichnet, dass** die Daten gemessene Daten aus der komplexen Anlage, sind, insbesondere Temperatur, Motor- oder Generatorstrom, Drehzahl, Wirkleistung, Frequenz, Drehmoment, Zwischenkreisspannung.

17. Vorrichtung zur Anomalieerkennung in einer komplexen Anlage (A1, A2, A3) gemäß einem der vorherigen Patentansprüche 10 bis 16, **dadurch gekennzeichnet, dass** abhängig von dem Anomalie-Score durch die Steuerung eine geeignete Aktion in der komplexen Anlage ausgelöst wird, um einen Schaden in der Anlage zu verhindern.
